# EUROPÄISCHE PATENTSCHRIFT

(11) **EP 2 990 656 B1**
(45) Veröffentlichungstag und Bekanntmachung des Hinweises auf die Patenterteilung: **28.07.2021**
(21) Anmeldenummer: 15180797.1
(22) Anmeldetag: 12.08.2015
(51) Int. Cl.: F16C 32/04, F04D 19/04, F04D 23/00, F04D 27/02, F04D 29/058

(54) **VAKUUMPUMPE**
VACUUM PUMP
POMPE À VIDE

(30) Priorität: 01.09.2014 DE 102014112553
(43) Veröffentlichungstag der Anmeldung: 02.03.2016
(73) Patentinhaber: Pfeiffer Vacuum GmbH, 35614 Asslar (DE)
(72) Erfinder: Antonacci, Marco, 35585 Wetzlar (DE); Hofmann, Jan, 35305 Grünberg (DE); Mekota, Mirko, 35630 Ehringshausen (DE); Schill, Michael, 35614 Asslar (DE); Stoll, Tobias, 35644 Hohenahr (DE)
(74) Vertreter: Manitz Finsterwald Patent- und Rechtsanwaltspartnerschaft mbB

(56) Entgegenhaltungen:
- EP-A1- 2 759 726
- DE-A1- 4 327 506
- DE-T2-602004 000 798
- JP-A- H11 336 691
- JP-A- 2001 003 890
- JP-U- S 639 495

## Beschreibung

Die Erfindung betrifft eine Vakuumpumpe, insbesondere Turbomolekularpumpe oder Seitenkanalpumpe, mit einem eine Rotorwelle umfassenden Rotor, einem Stator und einem im Bereich des Pumpeneinlasses vorgesehenen Magnetlagerraum, in dem zur drehbaren Unterstützung der Rotorwelle ein Magnetlager angeordnet ist. Dabei kann das Magnetlager insbesondere ein Permanentmagnetlager umfassen.

Vakuumpumpen werden in unterschiedlichen technischen Prozessen eingesetzt, um ein für den jeweiligen Prozess notwendiges Vakuum zu schaffen. Zur drehbaren Unterstützung der Rotorwelle können die Vakuumpumpen mit unterschiedlichen Lagerungen versehen sein. Eine mögliche Lagerungsform beispielsweise für Turbomolekularpumpen ist die sogenannte Hybridlagerung, bei der die Rotorwelle auf der dem Vorvakuum zugewandten Seite durch ein öl- oder fettgeschmiertes Wälzlager, insbesondere Kugellager, und auf der Hochvakuumseite, d.h. im Bereich des Pumpeneinlasses, durch ein Permanentmagnetlager gelagert ist. Ein Magnetlager besitzt den Vorteil, dass es vibrationsarm und berührungslos läuft und keinerlei Schmierung benötigt. Es umfasst in der Regel eine rotorseitige Lagerhälfte und eine statorseitige Lagerhälfte, die jeweils einen Ringstapel aus mehreren in axialer Richtung aufeinander gestapelten permanentmagnetischen Ringen umfassen. Die Magnetringe liegen einander unter Ausbildung eines Ringspalts radial gegenüber. Da sich dieser Ringspalt über eine im Vergleich zu seiner radialen Spaltbreite großen Strecke in axialer Richtung erstreckt, wird dieser Ringspalt nachstehend auch als axialer Ringspalt bezeichnet. Ein Nachteil solcher Magnetlager besteht allerdings darin, dass aufgrund des erforderlichen Spalts die Magnetringe mehr oder weniger den üblicherweise schädlichen Prozessgasen ausgesetzt sind. Diese Gase können das Material der Magnetringe durch chemische Prozesse schädigen, was zu einem vorzeitigen Ausfall der Vakuumpumpe führen kann.

Die DE 43 27 506 A1 und die DE 60 2004 000 798 T2 offenbaren jeweils Vakuumpumpen mit einem eine Rotorwelle umfassenden Rotor, einem Stator, einem Magnetlagerraum, in dem zur drehbaren Unterstützung der Rotorwelle ein Magnetlager angeordnet ist, und einer dynamischen Dichtung bzw. Bewegungsdichtung.

Der Erfindung liegt die Aufgabe zugrunde, eine Vakuumpumpe der eingangs genannten Art anzugeben, bei der unter Aufrechterhaltung eines möglichst einfach und kompakt gehaltenen Aufbaus ein Eindringen von Prozessgas in den im Bereich des Pumpeneinlasses vorgesehenen Magnetlagerraum verhindert wird.

Die Aufgabe wird erfindungsgemäß durch eine Vakuumpumpe mit den Merkmalen des Anspruchs 1 gelöst.

Die Vakuumpumpe, bei der es sich insbesondere um eine Turbomolekularpumpe oder Seitenkanalpumpe handeln kann, umfasst einen Rotor mit einer Rotorwelle, einen Stator und einen im Bereich des Pumpeneinlasses bzw. auf der Hochvakuumseite vorgesehenen Magnetlagerraum, in dem zur drehbaren Unterstützung der Rotorwelle ein Magnetlager angeordnet ist, das insbesondere ein Permanentmagnetlager umfassen kann.

Gemäß der Erfindung umfasst die Vakuumpumpe Mittel, um den Magnetlagerraum unter Nutzung des relativ zum Stator rotierenden Rotors abzusperren.

Gemäß der Erfindung ist zum Absperren des Magnetlagerraums eine Sperrstufe vorgesehen, die eine zwischen Rotor und Stator vorgesehene dynamische Labyrinthdichtung oder Siegbahnstufe umfasst.

Die Erfindung wird im Folgenden anhand der Zeichnung näher erläutert; in dieser zeigen:
- Fig. 2: eine schematische Teildarstellung einer Vakuumpumpe, deren im Bereich des Pumpeneinlasses vorgesehener Magnetlagerraum unter Nutzung des relativ zum Stator rotierenden Rotors evakuiert bzw. abgesperrt wird, die aber nicht erfindungsgemäß ausgebildet ist, und
- Fig. 3: eine schematische Darstellung einer beispielhaften Ausführungsform einer erfindungsgemäßen Vakuumpumpe, deren im Bereich des Pumpeneinlasses vorgesehener Magnetlagerraum unter Nutzung des relativ zum Stator rotierenden Rotors abgesperrt wird.

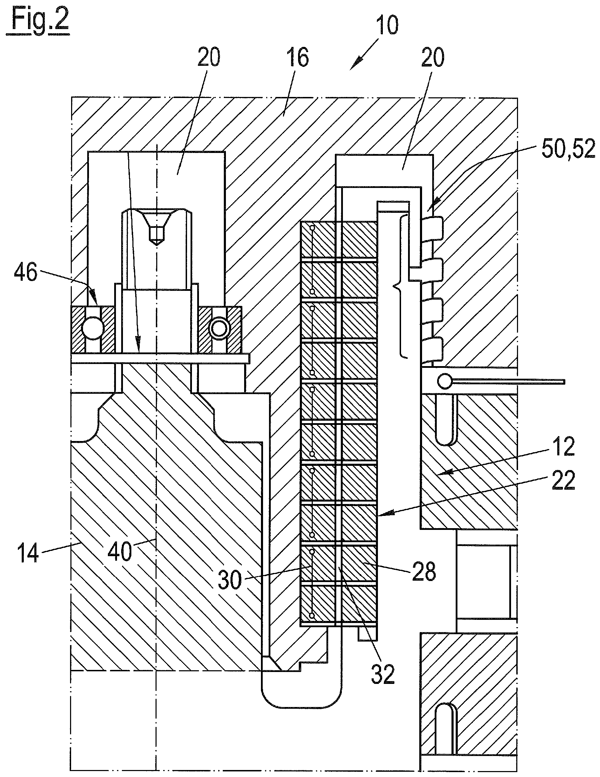

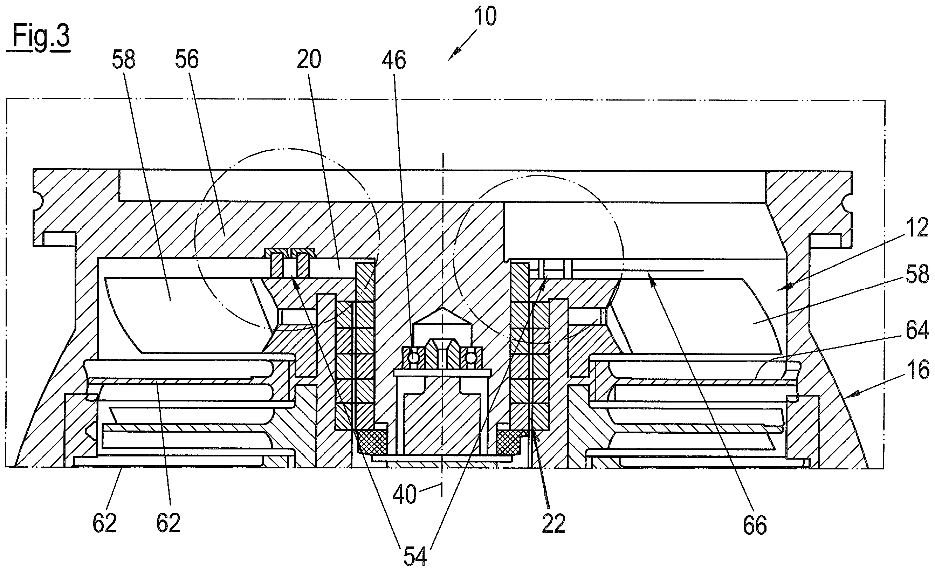

Die Fig. 2 und 3 zeigen in schematischen Teildarstellungen unterschiedliche Beispiele einer Vakuumpumpe, bei der es sich um eine Turbomolekularpumpe handelt, wobei dieser Pumpentyp für die Realisierung bzw. Anwendung der Erfindung aber nicht zwingend ist. Der erfindungsgemäße Schutz der Magnetlagerung kann auch bei anderen Pumpentypen zum Einsatz kommen.

Die Vakuumpumpe umfasst einen Rotor 12 mit einer Rotorwelle 14, einen Stator 16 sowie einen im Bereich des Pumpeneinlasses 18 vorgesehenen Magnetlagerraum 20, in dem zur drehbaren Unterstützung der Rotorwelle 14 ein Magnetlager 22 angeordnet ist. Das Magnetlager 22 kann insbesondere ein Permanentmagnetlager umfassen.

Das Magnetlager 22 weist eine rotorseitige Lagerhälfte 24 und eine statorseitige Lagerhälfte 26 auf, die jeweils einen Ringstapel aus mehreren in axialer Richtung aufeinandergestapelten permanentmagnetischen Ringen 28 bzw. 30 umfassen.

Die Magnetringe 28, 30 liegen einander unter Ausbildung eines engen Lagerspalts 32 radial gegenüber, wobei die rotorseitigen Magnetringe 28 radial außen und die statorseitigen Magnetringe 30 radial innen angeordnet sind. Das in dem Lagerspalt 32 vorhandene magnetische Feld bewirkt magnetische Abstoßungskräfte zwischen den Magnetringen 28, 30, die eine radiale Lagerung der Rotorwelle 14 bewirken.

Die in den Fig. 2 und 3 dargestellten Vakuumpumpen 10 umfassen jeweils Mittel, um den Magnetlagerraum unter Nutzung des während des Betriebs relativ zum Stator 16 rotierenden Rotors 12 zu evakuieren bzw. abzusperren.

Dabei ist bei der Ausführungsform gemäß Fig. 2 ein im Bereich des Magnetlagers 20 vorgesehener axialer Ringspalt 50 zwischen dem Rotor 12 und dem Stator 16 als den Magnetlagerraum 20 beaufschlagende Pumpstufe bzw. Sperrstufe 52 ausgeführt. Hierzu kann der axiale Ringspalt 50 beispielsweise zur Bildung einer Holweck- oder Kreuzgewindepumpstufe rotor- und/oder statorseitig insbesondere eine strukturierte pumpaktive Fläche aufweisen. Eine solche strukturierte pumpaktive Fläche kann insbesondere einen oder mehrere Förderkanäle bilden, die schraubenlinienförmig bzw. gewindeartig um die Rotorachse 40 herum in axialer Richtung verlaufen.

Der axiale Ringspalt 50 kann also rotor- und/oder statorseitig mit einer Art Gewinde um die Rotorachse 40 versehen sein.

Eine solche Pumpstufe, die z.B. ein Kompressionsverhältnis von mindestens 2 aufweisen kann, sorgt dafür, dass im Bereich der Magnetringe 28, 30 ein geringerer Druck und damit eine geringere Partikeldichte an Schadmolekülen vorhanden ist, als dies ohne diese Pumpstufe der Fall wäre. Dies führt zu einem geringeren Angriff der Magnetringe 28, 30 durch die Prozessgase und damit zu einer längeren Haltbarkeit des Magnetlagers 22 im Betrieb mit aggressiven Pumpmedien.

Alternativ kann der axiale Ringspalt 50 beispielsweise auch als Gaede- oder Siegbahnstufe ausgeführt sein. Zudem wäre beispielsweise auch eine Ausführung denkbar, gemäß der der axiale Ringspalt 50 eine entsprechend den räumlichen Verhältnissen kleine Turboschaufelstruktur umfasst.

Fig. 3 zeigt eine Ausführungsform einer erfindungsgemäßen Vakuumpumpe, die zum Absperren des Magnetlagerraumes 20 eine Sperrstufe 54 aufweist, die eine zwischen Rotor 12 und Stator 16 vorgesehene dynamische Labyrinthdichtung oder Siegbahnstufe umfasst.

Beim vorliegenden Ausführungsbeispiel ist die betreffende Sperrstufe 54 zwischen der einlassseitigen Rotorscheibe 58 und einem dem Stator 16 zugeordneten Einlassflansch der Vakuumpumpe 10 angeordnet.

In der Darstellung gemäß Fig. 3 sind zudem auch wieder das Magnetlager 22, das Not- bzw. Fanglager 46 sowie Statorscheiben 62 und weitere Rotorscheiben 64 zu erkennen.

### Bezugszeichenliste

- 10: Vakuumpumpe
- 12: Rotor
- 14: Rotorwelle
- 16: Stator
- 18: Pumpeneinlass
- 20: Magnetlagerraum
- 22: Magnetlager
- 24: rotorseitige Lagerhälfte
- 26: statorseitige Lagerhälfte
- 28: rotorseitiger Magnetring
- 30: statorseitiger Magnetring
- 32: Lagerspalt
- 40: Rotorachse
- 46: Not- bzw. Fanglagereinsatz
- 50: Ringspalt
- 52: Pumpstufe, Sperrstufe
- 54: Sperrstufe
- 56: Einlassflansch
- 58: Rotorscheibe
- 62: Statorscheibe
- 64: Rotorscheibe
- 66: Prozessgas

## Patentansprüche

1. Vakuumpumpe (10), insbesondere Turbomolekularpumpe oder Seitenkanalpumpe, mit einem eine Rotorwelle (14) umfassenden Rotor (12), einem Stator (16) und einem im Bereich des Pumpeneinlasses (18) vorgesehenen Magnetlagerraum (20), in dem zur drehbaren Unterstützung der Rotorwelle (14) ein Magnetlager (22) angeordnet ist,
wobei Mittel (52, 54) vorgesehen sind, um den Magnetlagerraum (20) unter Nutzung des relativ zum Stator (16) rotierenden Rotors (12) abzusperren,
**dadurch gekennzeichnet, dass** zum Absperren des Magnetlagerraumes (20) eine Sperrstufe (54) vorgesehen ist, die eine zwischen Rotor (12) und Stator (16) vorgesehene dynamische Labyrinthdichtung oder Siegbahnstufe umfasst.

## Claims

1. A vacuum pump (10), in particular a turbomolecular pump or a side channel pump, comprising a rotor (12) which comprises a rotor shaft (14); a stator (16); and a magnetic bearing space (20) which is provided in the region of the pump inlet (18) and in which a magnetic bearing (22) is arranged for rotatably supporting the rotor shaft (14),
wherein means (52, 54) are provided to block the magnetic bearing space (20) while using the rotor (12) rotating relative to the stator (16),
**characterized in that** a blocking stage (54) is provided for blocking the magnetic bearing space (20), said blocking stage (54) comprising a dynamic labyrinth seal or Siegbahn stage provided between the rotor (12) and the stator (16).

## Revendications

1. Pompe à vide (10), en particulier pompe turbomoléculaire ou pompe régénérative à canal latéral, comportant un rotor (12) pourvu d'un arbre de rotor (14), un stator (16) et un espace de palier magnétique (20) prévu dans la zone de l'entrée de pompe (18), espace dans lequel est disposé un palier magnétique (22) pour supporter en rotation l'arbre de rotor (14),
des moyens (52, 54) étant prévus pour obturer l'espace de palier magnétique (20) en utilisant le rotor (12) tournant par rapport au stator (16),
**caractérisée en ce que**
un étage d'obturation (54) est prévu pour obturer l'espace de palier magnétique (20), étage qui comprend un joint labyrinthe ou étage de Siegbahn dynamique prévu entre le rotor (12) et le stator (16).
